# EUROPEAN PATENT SPECIFICATION

(11) **EP 3 267 263 B1**
(45) Date of publication and mention of the grant of the patent: **29.01.2020**
(21) Application number: 16178427.7
(22) Date of filing: 07.07.2016
(51) Int. Cl.: G03H 1/04, G01B 9/021, G01B 9/02, G01N 21/45, G02B 21/36, G02B 21/00, G01B 9/04, G02B 27/10, G03H 1/00

(54) **AN INTERFEROMETRIC MICROSCOPY ARRANGEMENT WITH A POINT-LIKE BEAM-SPLITTING LAYER**
INTERFEROMETRISCHE MIKROSKOPIEANORDNUNG MIT PUNKTARTIGER STRAHLTEILUNGSSCHICHT
AGENCEMENT DE MICROSCOPIE INTERFÉROMÉTRIQUE AVEC UNE COUCHE DE DIVISION DE FAISCEAU EN FORME DE POINT

(43) Date of publication of application: 10.01.2018
(73) Proprietor: Siemens Healthcare GmbH, 91052 Erlangen (DE)
(72) Inventor: SCHICK, Anton, 84149 Velden (DE); HAYDEN, Oliver, 85368 Moosburg (DE); SCHMIDT, Oliver, 91052 Erlangen (DE)

(56) References cited:
- WO-A1-2015/052715
- US-A1- 2012 200 901
- US-A1- 2013 003 073
- US-A1- 2013 265 585
- US-A1- 2015 049 343

## Description

The present invention relates to interferometric techniques, and more particularly to an interferometric microscopy arrangement with a point-like beam splitting layer.

Medical technology in recent times has witnessed the advent of numerous medical devices and microscopy techniques. A lot of these microscopy techniques are used for imaging microscopic specimens or samples by detecting and analyzing interference patterns formed by superimposition of an object beam and a reference beam for example Interferometric microscopy, also referred to as Digital holographic microscopy (DHM). An emerging technique in interferometric microscopy is common path interferometry in which a light beam is shone or impinged on a sample to be inspected and then the light beam emerging after interacting with the sample or specimen is split into a reference beam and an object beam. Subsequently, object information is filtered out or deleted from the reference beam and then the filtered reference beam is superimposed with the object beam to detect the interference pattern to be studied.

Common path interferometry differs from the commonly known different path interferometry in the sense that unlike the different path interferometry where the light beam is split into the reference beam and the object beam before interacting with the sample, in common path interferometry the light beam is split into the reference beam and the object beam after interaction with the sample. In different path interferometry, only the object beam interacts with the sample, whereas in common path interferometry, an incoming beam interacts with the sample and emerges from the sample containing the object information and then this emergent beam is divided into the reference beam and the object beam, and subsequently the object information is deleted or filtered from the reference beam, usually by spatial filtering, before the reference beam and the object beam are superimposed to form the interference pattern as an output of the interferometry from which the amplitude and phase information are analyzed that represent characteristics of the sample such as physical structures in the sample, density of the sample, and so on and so forth. A major advantage of common path interferometry over different path interferometry is stability because unlike different path interferometry in common path interferometry the light beam interacting with the sample travels as one and is split and subjected to different paths - namely an object beam path and a reference beam path only for short travel distances as compared to different path interferometry where the light beam is split much earlier and thus chances of introduction of error are high.

Different interferometric microscopy arrangements are described in the following documents. WO2015/052715 A1 describes a differential interference contrast optical arrangement, US 2015/049343 A1 a digital holographic microscopy optical arrangement, US 2013/265585 A1 a phase measurement optical arrangement and US 2012/200901 A1 an interferometer optical arrangement for off-axis digital holographic microscopy.

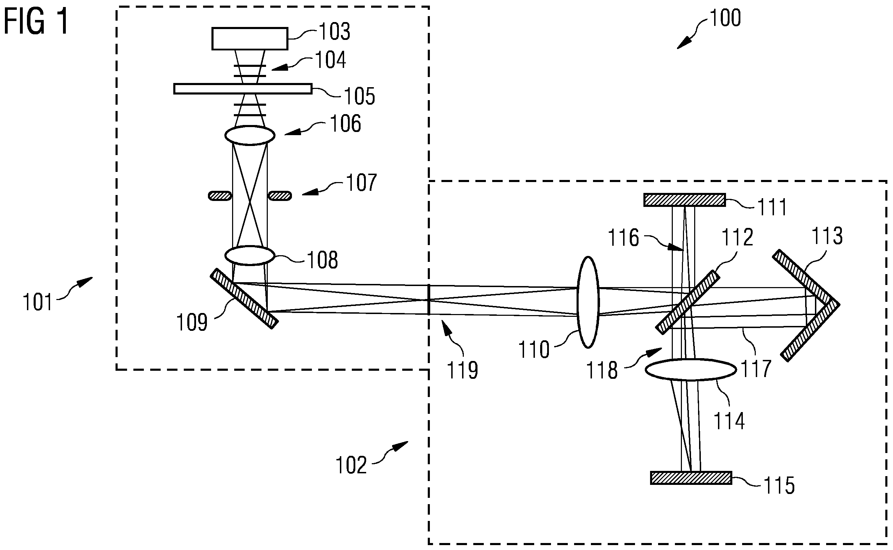

FIG 1 schematically represents a conventionally known interferometric device 100 for common path interferometric technique, wherein a single incoming beam of collimated coherent light is interacted with the sample and then split into the reference beam and the object beam by a beam splitter.

The interferometric device 100 has two units - a microscope unit 101 and an interferometric unit 102. The microscope unit 101 of the interferometric device 100 has a light source 103 from which a light beam 104 is generated and shone upon a sample positioned in a sample plane 105. The light 103 interacts with the sample in the sample plane 105 and emerges on the other side where the light 104 is received by a microscope objective 106. The light 104 emerges out of a pupil 107 of the microscope objective 106 and travels further through a first lens 108 and then onto a reflector 109. The reflector 109 directs the light 104 towards the interferometric unit 102. The light 104 at this stage is not differentiated into a reference or an object beam. The light 104 forms an intermediate image of the sample at an intermediate image plane 119 which is located at the junction of the microscope unit 101 and the interferometric unit 102.

In the interferometric unit 102, the light 104 travels through a second lens 110 and onto a beam splitter/combiner 112 which split the light 104 into two components. One of the two components of the light 104 created by the beam splitter/combiner 112 travels towards a spatial filter 111 and the other component travels towards a retroreflector 113. The spatial filter 111 may comprise a pin hole positioned in front of a reflector. Only that part of the light traveling towards the spatial filter 111 which goes through the pin hole gets reflected back to the beam splitter/combiner 112.

The technique of spatial filtering, including use of pin hole as spatial filter, to delete or filter out object information from a light is well known in the art of optics and thus not explained herein in details for sake of brevity. The light that is reflected back from the spatial filter 111 towards the beam splitter/combiner 112 forms a reference beam 116. The spatially filtered reference beam 116 after being received by the beam splitter/combiner 112 is directed by the beam splitter/combiner 112 towards a detector 115. The other part of the light 104 that travels from the beam splitter/combiner 112 towards the retroreflector 113 is reflected back towards the beam splitter/combiner 112 and forms an object beam 117. The object beam 117 is then directed by the beam splitter/combiner 112 towards the detector 115. The object beam 117 and the spatially filtered reference beam 116 then pass through a third lens 114 arranged in a 4f configuration to the second lens 110. The object beam 117 and the spatially filtered reference beam 116 are superimposed at the detector 115 and together form the interference pattern at the detector 115.

As can be noticed from the description of FIG 1 describing a conventionally known interferometric device 100, the interferometric technique implemented through the interferometric device 100 requires a large number of lenses, for example the first lens 108, the second lens 110 and the third lens 114 besides the microscope objective 106, and other optical elements before the interference pattern is detected at the detector 115 and thus making the conventionally known interferometric device 100 complex and prone to error in set-up and handling. Furthermore, since the light 104 travels through a number of achromatic lenses, the image quality i.e. the interference pattern data is compromised in quality. Furthermore, the conventionally known interferometric device 100 is such that there is no direct access to the intermediate image formed at the intermediate image plane 119.

Thus there is a need for an interferometric arrangement that is simpler, easy to set up and operate and uses a lower number of optical elements, such as lenses. Thus the object of the present disclosure is to provide a technique for improving present day interferometric devices and setups.

The above objects are achieved by an interferometric microscopy arrangement according to claim 1 of the present technique. Advantageous embodiments of the present technique are provided in dependent claims. Features of claim 1 may be combined with features of dependent claims, and features of dependent claims can be combined together.

According to the present technique, an interferometric microscopy arrangement for inspecting a sample is presented. The sample to be inspected is placed at a sample plane. The sample is inspected by shining a light beam from an illumination source onto the sample and detecting an interference pattern at an optical detector. The interferometric microscopy arrangement includes an objective lens, a beam splitter, a reference beam tube lens, an object beam tube lens, an optical detector, a beam combiner unit, a reference beam reflector and an object beam reflector. The objective lens is configured to receive the light beam after the light beam has interacted with the sample.

The beam splitter unit is configured to be positioned at a focal length of the objective lens and to receive the light beam from the objective lens. The beam splitter unit has a transparent substrate and a point-like beam splitting layer wherein the point-like beam splitting layer is configured to split a part of the light beam into a reference beam and an object beam. The reference beam results from reflection at the point-like beam splitting layer and the object beam results from transmission though the point-like beam splitting layer. The reference beam is generated such that a part of the light beam is spatially filtered to remove at least part of an object information from the reference beam so created. The reference beam tube lens is configured to receive the reference beam from the beam splitter unit. The object beam tube lens is configured to receive the object beam from the beam splitter unit.

The beam combiner unit includes a transparent substrate and a beam combiner layer. The beam combiner unit is configured to receive the reference beam from the reference beam tube lens and to receive the object beam from the object beam tube lens, and to combine the reference beam and the object beam to form a pattern generating beam and to direct the pattern generating beam towards the optical detector to form the interference pattern at the optical detector.

The reference beam reflector reflects the reference beam coming from the reference beam tube lens towards the beam combiner unit. The object beam reflector reflects the object beam coming from the object beam tube lens towards the beam combiner unit.

As a result of the interference of the object beam and the reference beam, creation of the interference pattern occurs which is detected and thus provides information about the sample for example, if the sample is blood, the interference pattern reveals the features, such as dimensions, shape, size, etc, of the components of the blood such as WBCs, RBCs, etc. The present invention reduces, compared to generally known interferometric optical setups, the number of elements, i.e. lenses, reflectors, etc, in the optical arrangement for generation of these interference patterns and thus the interferometric microscopy arrangement of the present technique is simple, robust, cost effective, compact and easy to set-up.

In an embodiment of the present technique, the interferometric microscopy arrangement includes the optical detector. The optical detector is configured to be positioned at a focal length of the reference beam tube lens measured along an optical path of the reference beam and the pattern generating beam and/or to be positioned at a focal length of the object beam tube lens measured along an optical path of the object beam and the pattern generating beam. The interference patterns detected at the optical detector are thus sharp.

In another embodiment of the present technique, an optical path length of the reference beam between the beam splitter unit and the optical detector is the same as an optical path length of the object beam between the beam splitter unit and the optical detector. In another embodiment, the beam splitter unit and the beam combiner unit are both configured such that a sum of optical path lengths of the reference beam through the beam splitter unit and the beam combiner unit is equal to a sum of optical path lengths of the object beam through the beam splitter unit and the beam combiner unit. This ensures balancing of the coherence length for the object and the reference beam.

In another embodiment of the interferometric microscopy arrangement, the transparent substrate of the beam splitter unit and the transparent substrate of the beam combiner unit are both configured such that a sum of optical path lengths of the reference beam through the transparent substrates of the beam splitter unit and the beam combiner unit is equal to a sum of optical path lengths of the object beam through the transparent substrates of the beam splitter unit and the beam combiner unit. In a further embodiment, the beam splitter unit is positioned such that the light beam received from the objective lens reaches the point-like beam splitting layer after traveling through the transparent substrate of the beam splitter unit. In yet another embodiment, the beam combiner unit is positioned such that the object beam received from the object beam tube lens reaches the beam combiner layer after traveling through the transparent substrate of the beam combiner unit and the reference beam received from the reference beam tube lens directly reaches the beam combiner layer. The above embodiments, individually as also in combinations, provide ways of realizing balancing of the coherence length for the object and the reference beam.

In another embodiment of the present technique, the interferometric microscopy arrangement includes an illumination source. The illumination source is configured to provide at least one of collimated light, coherent light and a combination thereof. An example for such a light source is a laser diode which provides coherent light emission from a small region which can be collimated easily, such that the object is illuminated by a plane wave. Alternative exemplary light sources include but are not limited to vertical-cavity surface-emitting lasers (VCSEL), superluminescent light emitting diodes (SLED) and supercontinuum fiber-laser
sources. In a related embodiment, the illumination source includes a first illumination source configured to generate light having a first wavelength, a second illumination source configured to generate light having a second wavelength, and an optical arrangement configured to combine the light having the first wavelength and the light having the second wavelength to form the light beam prior to shining the light beam onto the sample placed at the sample plane. Thus the sample can be simultaneously probed by the light beam having components with different wavelengths.

In another embodiment of the present technique, the interferometric microscopy arrangement includes an additional optical detector besides the optical detector disclosed earlier hereinabove. The additional optical detector is configured to detect the light of the second wavelength, whereas the optical detector disclosed earlier hereinabove is configured to detect light of the first wavelength. The interferometric microscopy arrangement further includes a dichroic beam splitter surface configured to receive the pattern generating beam from the beam combiner unit and to split the pattern generating beam into a first wavelength pattern generating beam component and a second wavelength pattern generating beam component, and to direct the first wavelength pattern generating beam component towards the optical detector to form at the optical detector the interference pattern resulting from the light of the first wavelength and the second wavelength pattern generating beam component towards the additional optical detector to form at the additional optical detector the interference pattern resulting from the light of the second wavelength. In a related embodiment, the optical detector and the additional optical detector are equidistant from a reference point at the dichroic beam splitter surface when normally measured from the optical detector and the additional optical detector. Thus different detectors detect the interference patterns corresponding to different wavelengths of light.

In the interferometric microscopy arrangement, the beam splitter unit is positioned at the focal length of the objective lens; more particularly, the point-like beam splitting layer is positioned at a focal point of the objective lens. This ensures precise removal of the object information from the reference beam that is generated by the point-like beam splitting layer of the beam splitter unit.

The present technique is further described hereinafter with reference to illustrated embodiments shown in the accompanying drawing, in which:
- FIG 1: schematically illustrates a conventionally known interferometric device;
- FIG 2: schematically illustrates an exemplary embodiment of an interferometric microscopy arrangement, according to the present technique;
- FIG 3: schematically illustrates an exemplary embodiment of a beam splitter unit and a relative arrangement of the beam splitter unit in the interferometric arrangement of the present technique depicted in the exemplary embodiment of FIG 2;
- FIG 4: schematically illustrates an exemplary embodiment of a beam combiner unit and a relative arrangement of the beam combiner unit in the interferometric arrangement of the present technique depicted in the exemplary embodiment of FIG 2; and
- FIG 5: schematically illustrates another exemplary embodiment of the interferometric microscopy arrangement for simultaneously probing a sample with lights of multiple wavelengths in accordance with the present technique.

Hereinafter, above-mentioned and other features of the present technique are described in details. Various embodiments are described with reference to the drawings, wherein like reference numerals are used to refer to like elements throughout. In the following description, for the purpose of explanation, numerous specific details are set forth in order to provide a thorough understanding of one or more embodiments. It may be noted that the illustrated embodiments are intended to explain, and not to limit the invention. It may be evident that such embodiments may be practiced without these specific details.

It may be noted that in the present disclosure, the terms "first", "second", "third", etc. are used herein only to facilitate discussion, and carry no particular temporal or chronological significance unless otherwise indicated.

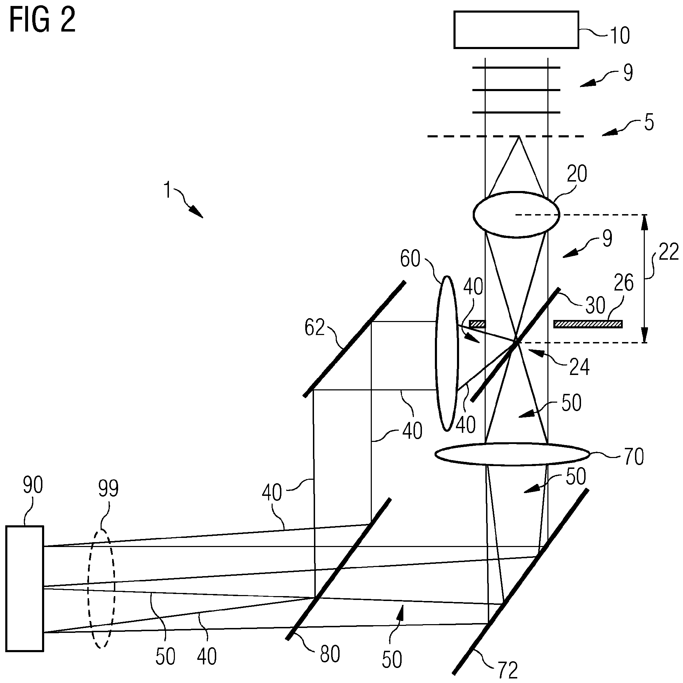

FIG 2 schematically illustrates an exemplary embodiment of an interferometric microscopy arrangement 1, according to the present technique.

The sample to be inspected is placed at a sample plane 5. The sample may be any sample suited for inspection by an interferometric microscopy device, for example whole blood of a subject, untreated blood of a subject, isolated parts of blood such as WBCs, RBCs, etc. The sample is inspected by shining a light beam 9 from an illumination source 10 onto the sample and detecting an interference pattern at an optical detector 90. The illumination source 10 may be, but not limited to, Laser, superluminescent diode (SLED or SLD), and so on and so forth. Additional optics may be employed to increase or regulate collimation and/or coherence in the light beam 9.

In the exemplary embodiment of FIG 2, the interferometric microscopy arrangement 1, hereinafter also referred to as the arrangement 1, further includes an objective lens 20, a beam splitter 30, a reference beam tube lens 60, an object beam tube lens 70, and a beam combiner unit 80. The objective lens 20, which can be understood as a commonly used microscope objective, receives the light beam 9 after the light beam 9 has interacted with the sample positioned at the sample plane 5. As a result of passing through the objective lens 20, the light beam 9 is focused on a Fourier plane of the objective lens 20. The light beam 9 as a result of interacting with the sample has object information i.e. information that can be analyzed or processed to reveal or determine certain aspects of the sample for example a shape of the sample or a shape of a content of the sample such as a shape of the WBC.

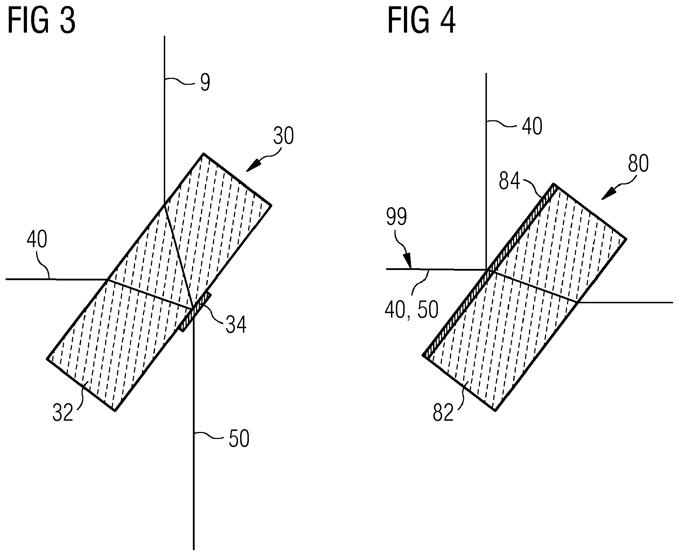

The beam splitter unit 30 is positioned at a focal length 12 of the objective lens 20. The beam splitter unit 30 receives the light beam 9 from the objective lens 20. Structural details of the beam splitter 30 and its orientation with respect to the objective lens 20 have been schematically depicted in FIG 3. As depicted in FIG 3, in combination with FIG 2, the beam splitter unit 30 has a transparent substrate 32, such as glass or a transparent polymer, and a point-like beam splitting layer 34.

The point-like beam splitting layer 34 splits a part of the light beam 9 into a reference beam 40 and an object beam 50. The point-like beam splitting layer 34 may be achieved by using, but not limited to, an optical coating such as metallic or dielectric material coating on a surface of the transparent substrate 32 such that when the light beam 9 is incident on the point-like beam splitting layer 34, a part of the light beam 9 incident on the point-like beam splitting layer 34 is reflected whereas another part of the light beam 9 incident on the point-like beam splitting layer 34 is transmitted. The reference beam 40 results from reflection at the point-like beam splitting layer 34 and the object beam 50 results from transmission though the point-like beam splitting layer 34. The object beam 50 further includes part of the light beam 9 that is transmitted through the transparent substrate 32 and is not incident on the point-like beam splitting layer 34.

The point-like beam splitting layer 34 is arranged such that the reference beam 40 that is generated by reflection at the point-like beam splitting layer 34 is in a spatially filtered state i.e. the light beam 9 is spatially filtered, as a result of the reflection at the point-like beam splitting layer 34, to remove at least part of the object information and to generate the reference beam 40. One way of arranging the beam splitter unit 30 is to position the beam splitter 30 at the focal length 22 of the objective lens 20, in particular, the point-like beam splitting layer 34 is positioned at a focal point 24 of the objective lens 20. Dimensions of the point-like beam splitting layer 34 may be understood as dimensions of a pin-hole that are usually employed for spatial filtering in conventional interferometry devices, and may have a diameter between a few micrometers and a few hundred micrometers. The diameter of the point-like beam splitting layer 34 is chosen based on the focal length of the objective lens 20. The technique of spatial filtering is well known in the art of optics and thus not explained herein in details for sake of brevity. In general, the point-like beam splitting layer 34 is arranged such that the part of the light beam 9 reflected by the point-like beam splitting layer 34 is free of the object information or at least bereft of any significant amount of object information. In one embodiment of the arrangement 1, the point-like beam splitting layer 34 is positioned at a pupil 26 of the objective lens 20.

The reference beam 40 coming from the point-like beam splitting layer 34 is then received by the reference beam tube lens 60, whereas the object beam 50 coming from the point-like beam splitting layer 34, and additionally but optionally from the transparent substrate 32 of the beam splitter unit 30, is received by the object beam tube lens 70. The reference beam tube lens 60 is arranged with the object lens 20 in a 4f configuration. Similarly, the object beam tube lens 70 is also arranged with the object lens 20 in a 4f configuration. The arrangement 1 may additionally include a reference beam reflector 62 that reflects the reference beam 40 coming from the reference beam tube lens 60 towards the beam combiner unit 80, and an object beam reflector 72 that reflects the object beam 50 coming from the object beam tube lens 70 towards the beam combiner unit 80.

Structural details of the beam combiner unit 80 and its orientation within the arrangement 1 have been schematically depicted in FIG 4. As depicted in FIG 4, in combination with FIG 2, the beam combiner unit 80 has a transparent substrate 82, such as glass or a transparent polymer, and a beam combiner layer 84. The beam combiner unit 80 receives the reference beam 40 from the reference beam tube lens 60 and receives the object beam 50 from the object beam tube lens 70, and combines the reference beam 40 and the object beam 50 to form a pattern generating beam 99. The pattern generating beam 99 is directed towards the optical detector 90, either directly as shown in FIG 2 or through additional optical elements (not shown) such as reflectors, to form the interference pattern at the optical detector 90.

In one embodiment of the arrangement 1, the beam combiner layer 84 and the point-like beam splitting layer 34 are of same thickness. Furthermore, the transparent substrate 32 of the beam splitter unit 30 and the transparent substrate 82 of the beam combiner unit 80 are of same thickness. As depicted in FIG 3 and FIG 4, in the interferometric microscopy arrangement 1, the transparent substrate 32 of the beam splitter unit 30 and the transparent substrate 82 of the beam combiner unit 80 are both configured such that a sum of optical path lengths of the reference beam 40 through the transparent substrates 32, 82 of the beam splitter unit 30 and the beam combiner unit 80 is equal to a sum of optical path lengths of the object beam 50 through the transparent substrates 32, 82 of the beam splitter unit 30 and the beam combiner unit 80.

Furthermore, as depicted in FIG 3, the beam splitter unit 30 is positioned such that the light beam 9 received from the objective lens 20 reaches the point-like beam splitting layer 34 after traveling through the transparent substrate 32 of the beam splitter unit 30, and thus the reference beam 40 reflected back by the point-like beam splitting layer 34 travels a second time through the transparent substrate 32 before emerging out of the beam splitter unit 30 and traveling towards the reference beam tube lens 60. Moreover, as depicted in FIG 4, the beam combiner unit 80 is positioned such that the object beam 50 received from the object beam tube lens 70, or the object beam reflector 72, reaches the beam combiner layer 84 after traveling through the transparent substrate 82 of the beam combiner unit 80; whereas the reference beam 40 received from the reference beam tube lens 60, or the reference beam reflector 62, directly reaches the beam combiner layer 84 i.e. without traveling through the transparent substrate 82 of the beam combiner unit 80. In another embodiment, however, the orientation of the beam splitter unit 30 and the beam combiner unit 80 may be reversed, i.e. the light beam 9 is incident directly on the point-like beam splitting layer 34 without traveling through the transparent substrate 32 and the object beam 50 is directly incident on the beam combiner layer 84 whereas the reference beam 40 is incident on the beam combiner layer 84 after traveling through the transparent substrate 84 of the beam combiner unit 80.

The reference beam 40 and the object beam 50 together form the pattern generating beam 99. As a result of the interference of the object beam 50 and the reference beam 40, as parts of the pattern forming beam 99, creation of the interference pattern that is detected occurs at the optical detector 90, for example but not limited to a CCD or a camera unit.

In another embodiment of the present technique, an optical path length of the reference beam 40 between the beam splitter unit 30, particularly the point-like beam splitting layer 34, and the optical detector 90 is same as an optical path length of the object beam 50 between the beam splitter unit 30, particularly the point-like beam splitting layer 34 and the optical detector 90. In another embodiment, the beam splitter unit 30 and the beam combiner unit 80 are both configured such that a sum of optical path lengths of the reference beam 40 through the beam splitter unit 30 and the beam combiner unit 80 is equal to a sum of optical path lengths of the object beam 50 through the beam splitter unit 30 and the beam combiner unit 80.

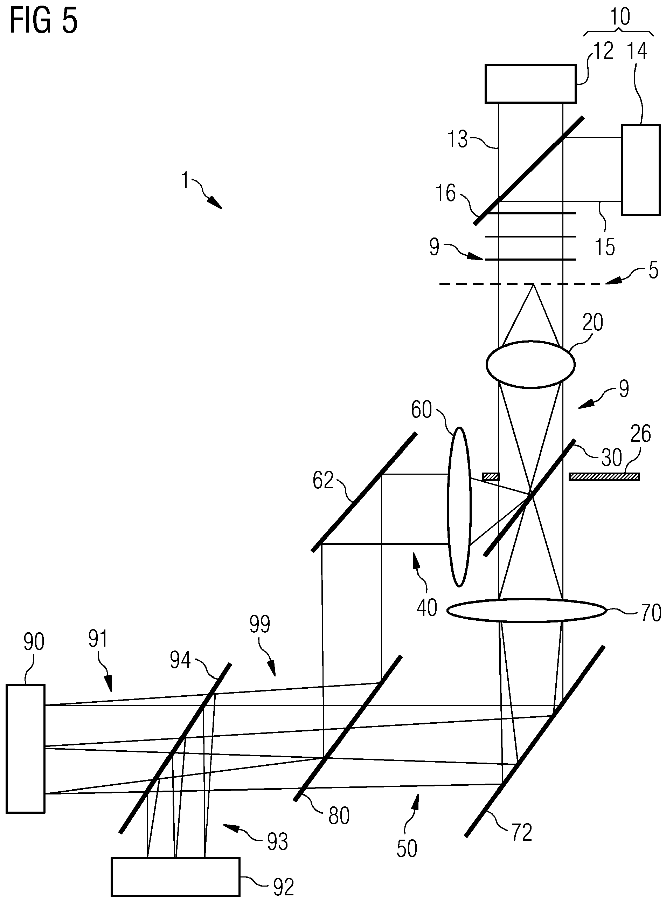

FIG 5 schematically illustrates another exemplary embodiment of the arrangement 1 for simultaneously probing the sample with lights of multiple wavelengths in accordance with the present technique. The illumination source 10 includes a first illumination source 12 and a second illumination source 14. The first illumination source 12 generates light having a first wavelength 13, also referred to hereinafter as first light beam 13, whereas the second illumination source 14 generates light having a second wavelength 14, also referred to hereinafter as second light beam 15. The arrangement 1 further includes an optical arrangement 16, such as a selection filter 16, configured to combine the light having the first wavelength 13 and the light having the second wavelength 14 to form the light beam 9 prior to shining the light beam 9 onto the sample placed at the sample plane 5.

Each of the first and second illumination sources 12, 14 may be, but not limited to, Laser, superluminescent diode (SLED or SLD), and so on and so forth. Additional optics may be employed to increase or regulate collimation and/or coherence in the light having a first wavelength 13 and/or the light having the second wavelength 15.

The selection filter 16 receives the first light beam 11 from the first illumination source 12 and receives the second light beam 15 from the second illumination source 14. The selection filter 16 then directs the first light beam 13 and the second light beam 15 towards the sample plane 5.

In an exemplary embodiment of the arrangement 1, the selection filter 16 may be, but is not limited to a dichroic filter. The dichroic filter also referred to as thin-film filter or interference filter is an optical filter that allows selective passage of a predetermined wavelength of light or a small range of predetermined wavelengths of light. The dichroic filter does not allow passage of other wavelengths of light through it i.e. the dichroic filter, instead the dichroic filter reflects the other wavelengths acting as a reflective surface. In the optical geometry of the arrangement 1 depicted in FIG 5, the first light beam 13 has a first wavelength that is different from a second wavelength of the second light beam 15, and the selection filter 16 or the dichroic filter 16 selectively allows passage of the first wavelength through the dichroic filter 16 but reflects the second wavelength. Thus, the selection filter 16 directs the first light beam 13 and the second light beam 15 towards the sample port 90.

It may be noted that a person skilled in the art would readily understand within the scope of the present technique, another exemplary embodiment (not shown) of the arrangement 1 having a different optical geometry of the arrangement 1 when compared to the optical geometry of the arrangement 1 depicted in FIG 5. In this other exemplary embodiment of the arrangement 1, the selection filter 16 or the dichroic filter 16 selectively allows passage of the second wavelength through the dichroic filter 16 but reflects the first wavelength. Thus, in this embodiment of the arrangement 1, the relative position of the two illumination sources - namely the first illumination source 12 and the second illumination source 14 - will be reversed or exchanged or swapped as compared to the position depicted schematically in FIG 5.

The arrangement 1 further includes an additional optical detector 92 besides the optical detector 90 disclosed earlier hereinabove. The additional optical detector 92 detects the light of the second wavelength 15, whereas the optical detector 90 detects the light of the first wavelength 13. The arrangement 1 also includes a dichroic beam splitter surface 94, hereinafter also referred to as the dichroic filter 94, configured to receive the pattern generating beam 99 from the beam combiner unit 80 and to split the pattern generating beam 99 into a first wavelength pattern generating beam component 91 and a second wavelength pattern generating beam component 93. The first wavelength pattern generating beam component 91 is directed towards the optical detector 90 to form at the optical detector 90 the interference pattern resulting from the light of the first wavelength 13 and the second wavelength pattern generating beam component 93 is directed towards the additional optical detector 92 to form at the additional optical detector 92 the interference pattern resulting from the light of the second wavelength 15.

The dichroic beam splitter surface 94, as depicted in FIG 5, allows passage of the light of the first wavelength 13 towards the optical detector 90 whereas it reflects the light of the second wavelength 15 and thus directs the light of the second wavelength 15 towards the additional optical detector 92.

However, it may be noted that a person skilled in the art would readily understand within the scope of the present technique, another exemplary embodiment (not shown) of the arrangement 1 having a different optical geometry of the arrangement 1 as compared to the optical geometry of the arrangement 1 depicted in FIG 5. In this other exemplary embodiment of the arrangement 1, the dichroic filter 94 selectively allows passage of the light having the second wavelength 15 through the dichroic filter 94 but reflects the light having the first wavelength 13. In this embodiment of the arrangement 1, a relative position of the optical detector 90 and additional optical detector 92 is reversed or swapped as compared to the embodiment depicted in FIG 5.

The optical detector 90 and the additional optical detector 92 are equidistant from a reference point at the dichroic beam splitter surface 94 when normally measured from the optical detector 90 and the additional optical detector 92.

While the present technique has been described in detail with reference to certain embodiments, it should be appreciated that the present technique is not limited to those precise embodiments. Rather, in view of the present disclosure which describes exemplary modes for practicing the invention, many modifications and variations would present themselves, to those skilled in the art without departing from the scope of this invention. The scope of the invention is, therefore, indicated by the following claims rather than by the foregoing description. All changes, modifications, and variations coming within the meaning of the claims are to be considered within their scope.

## Claims

1. An interferometric microscopy arrangement (1) for inspecting a sample placed at a sample plane (5) by shining a light beam (9) from an illumination source (10) onto the sample and detecting an interference pattern at an optical detector (90 ), the interferometric microscopy arrangement (1) comprising:
- an objective lens (20) configured to receive the light beam (9) after the light beam (9) has interacted with the sample;
- a beam splitter unit (30) positioned at a focal length (22) of the objective lens (20) and configured to receive the light beam (9) from the objective lens (20), wherein the beam splitter unit (30) comprises a transparent substrate (32) and a point-like beam splitting layer (34) wherein the point-like beam splitting layer (34) is configured to split a part of the light beam (9) into a reference beam (40) resulting from reflection at the point-like beam splitting layer (34) and an object beam (50) resulting from transmission through the point-like beam splitting layer (34), wherein the point-like beam splitting layer (34) is configured to spatially filter a part of the light beam (9) to remove at least a part of an object information from the reference beam (40) so created;
- a reference beam tube lens (60) configured to receive the reference beam (40) from the beam splitter unit (30);
- an object beam tube lens (70) configured to receive the object beam (50) from the beam splitter unit (30);
- an optical detector (90);
- a beam combiner unit (80) comprising a transparent substrate (82) and a beam combiner layer (84), the beam combiner unit (80) configured to receive the reference beam (40) from the reference beam tube lens (60) and to receive the object beam (50) from the object beam tube lens (70), and to combine the reference beam (40) and the object beam (50) to form a pattern generating beam (99) and to direct the pattern generating beam (99) towards the optical detector (90) to form the interference pattern at the optical detector (90);
- a reference beam reflector (62) that reflects the reference beam (40) coming from the reference beam tube lens (60) towards the beam combiner unit (80); and
- an object beam reflector (72) that reflects the object beam (50) coming from the object beam tube lens (70) towards the beam combiner unit (80).

2. The interferometric microscopy arrangement (1) according to claim 1, wherein the optical detector (90) is configured to be positioned at a focal length of the reference beam tube lens (60) measured along an optical path of the reference beam (40) and the pattern generating beam (99) and/or to be positioned at a focal length of the object beam tube lens (70) measured along an optical path of the object beam (50) and the pattern generating beam (99).

3. The interferometric microscopy arrangement (1) according to claims 1 or 2, wherein an optical path length of the reference beam (40) between the beam splitter unit (30) and the optical detector (90) is the same as an optical path length of the object beam (50) between the beam splitter unit (30) and the optical detector (90).

4. The interferometric microscopy arrangement (1) according to any of claims 1 to 3, wherein the beam splitter unit (30) and the beam combiner unit (80) are both configured such that a sum of optical path lengths of the reference beam (40) through the beam splitter unit (30) and the beam combiner unit (80) is equal to a sum of optical path lengths of the object beam (50) through the beam splitter unit (30) and the beam combiner unit (80).

5. The interferometric microscopy arrangement (1) according to any of claims 1 to 4, wherein the transparent substrate (32) of the beam splitter unit (30) and the transparent substrate (82) of the beam combiner unit (80) are both configured such that a sum of optical path lengths of the reference beam (40) through the transparent substrates (32, 82) of the beam splitter unit (30) and the beam combiner unit (80) is equal to a sum of optical path lengths of the object beam (50) through the transparent substrates (32, 82) of the beam splitter unit (30) and the beam combiner unit (80).

6. The interferometric microscopy arrangement (1) according to any of claims 1 to 5, wherein the beam splitter unit (30) is positioned such that the light beam (9) received from the objective lens (20) reaches the point-like beam splitting layer (34) after traveling through the transparent substrate (32) of the beam splitter unit (30).

7. The interferometric microscopy arrangement (1) according to any of claims 1 to 6, wherein the beam combiner unit (80) is positioned such that the object beam (50) received from the object beam tube lens (70) reaches the beam combiner layer (84) after traveling through the transparent substrate (82) of the beam combiner unit (80) and the reference beam (40) received from the reference beam tube lens (60) directly reaches the beam combiner layer (84).

8. The interferometric microscopy arrangement (1) according to any of claims 1 to 7, comprising the illumination source (10) .

9. The interferometric microscopy arrangement (1) according to claim 8, wherein the illumination source (10) is configured to provide at least one of collimated light, coherent light and a combination thereof.

10. The interferometric microscopy arrangement (1) according to claim 8 or 9, wherein the illumination source (10) comprises:
- a first illumination source (12) configured to generate light having a first wavelength (13);
- a second illumination source (14) configured to generate light having a second wavelength (15), and
- an optical arrangement (16) configured to combine the light having the first wavelength (13) and the light having the second wavelength (15) to form the light beam (9) prior to shining the light beam (9) onto the sample placed at the sample plane (5).

11. The interferometric microscopy arrangement (1) according to claim 10, further comprising:
- an additional optical detector (92) configured to detect the light having the second wavelength (15), wherein the optical detector (90) is configured to detect light having the first wavelength (13); and
- a dichroic beam splitter surface (94) configured to receive the pattern generating beam (99) from the beam combiner unit (80) and to split the pattern generating beam (99) into a first wavelength pattern generating beam component (91) and a second wavelength pattern generating beam component (93), and to direct the first wavelength pattern generating beam component (91) towards the optical detector (90) to form at the optical detector (90) the interference pattern resulting from the light having the first wavelength (13) and the second wavelength pattern generating beam component (93) towards the additional optical detector (92) to form at the additional optical detector (92) the interference pattern resulting from the light having the second wavelength (15).

12. The interferometric microscopy arrangement (1) according to claim 11, wherein the optical detector (90) and the additional optical detector (92) are equidistant from a reference point at the dichroic beam splitter surface (94) when normally measured from the optical detector (90) and the additional optical detector (92).

13. The interferometric microscopy arrangement (1) according to any of claims 10 to 12, wherein at least one of the first illumination source (12) and the second illumination source (14) is configured to provide at least one of collimated light, coherent light and a combination thereof.

14. The interferometric microscopy arrangement (1) according to any of claims 1 to 13, wherein the beam splitter unit (30) is positioned at the focal length (22) of the objective lens (20) .

15. The interferometric microscopy arrangement (1) according to any of claims 1 to 14, wherein the point-like beam splitting layer (34) is positioned at a focal point (24) of the objective lens (20).

## Patentansprüche

1. Interferometrische Mikroskopieanordnung (1) zum Untersuchen einer in einer Probenebene (5) platzierten Probe durch Leuchten eines Lichtbündels (9) von einer Beleuchtungsquelle (10) auf die Probe und Detektieren eines Interferenzmusters auf einem optischen Detektor (90), wobei die interferometrische Mikroskopieanordnung (1) Folgendes umfasst:
- eine Objektivlinse (20), die ausgelegt ist zum Empfangen des Lichtbündels (9), nachdem sich das Lichtbündel (9) mit der Probe in Wechselwirkung befand;
- eine Strahlteilereinheit (30), die bei einer Brennweite (22) der Objektivlinse (20) positioniert ist und ausgelegt ist zum Empfangen des Lichtbündels (9) von der Objektivlinse (20), wobei die Strahlteilereinheit (30) ein transparentes Substrat (32) und eine punktartige Strahlteilerschicht (34) umfasst, wobei die punktartige Strahlteilerschicht (34) ausgelegt ist zum Aufteilen eines Teils des Lichtbündels (9) in ein Referenzbündel (40), das sich durch Reflexion an der punktartigen Strahlteilerschicht (34) ergibt, und ein Objektbündel (50), das sich durch Transmission durch die punktartige Strahlteilerschicht (34) ergibt, wobei die punktartige Strahlteilerschicht (34) ausgelegt ist zum räumlichen Filtern eines Teils des Lichtbündels (9), um zumindest einen Teil von Objektinformationen von dem so geschaffenen Referenzbündel (40) zu entfernen;
- eine Referenzstrahltubuslinse (60), ausgelegt zum Empfangen des Referenzbündels (40) von der Strahlteilereinheit (30);
- eine Objektstrahltubuslinse (70), ausgelegt zum Empfangen des Objektbündels (50) von der Strahlteilereinheit (30);
- einen optischen Detektor (90);
- eine Strahlkombinierereinheit (80), umfassend ein transparentes Substrat (82) und eine Strahlkombiniererschicht (84), wobei die Strahlkombinierereinheit (80) ausgelegt ist zum Empfangen des Referenzbündels (40) von der Referenzstrahltubuslinse (60) und zum Empfangen des Objektbündels (50) von der Objektstrahltubuslinse (70) und zum Kombinieren des Referenzbündels (40) und des Objektbündels (50), um ein Mustererzeugungsbündel (99) auszubilden und das Mustererzeugungsbündel (99) auf den optischen Detektor (90) zu richten, um das Interferenzmuster auf dem optischen Detektor (90) auszubilden;
- einen Referenzstrahlreflektor (62), der das Referenzbündel (40) reflektiert, das von der Referenzstrahltubuslinse (60) zur Strahlkombinierereinheit (80) kommt; und
- einen Objektstrahlreflektor (72), der das Objektbündel (50) reflektiert, das von der Objektstrahltubuslinse (70) zur Strahlkombinierereinheit (80) kommt.

2. Interferometrische Mikroskopieanordnung (1) nach Anspruch 1, wobei der optische Detektor (90) dafür ausgelegt ist, bei einer Brennweite der Referenzstrahltubuslinse (60), gemessen entlang eines optisches Wegs des Referenzbündels (40) und des Mustererzeugungsbündels (99), positioniert zu werden, und/oder bei einer Brennweite der Objektstrahltubuslinse (70), gemessen entlang eines optischen Wegs des Objektbündels (50) und des Mustererzeugungsbündels (99), positioniert zu werden.

3. Interferometrische Mikroskopieanordnung (1) nach Ansprüchen 1 oder 2, wobei eine optische Weglänge des Referenzbündels (40) zwischen der Strahlteilereinheit (30) und dem optischen Detektor (90) die gleiche wie eine optische Weglänge des Objektbündels (50) zwischen der Strahlteilereinheit (30) und dem optischen Detektor (90) ist.

4. Interferometrische Mikroskopieanordnung (1) nach einem der Ansprüche 1 bis 3, wobei sowohl die Strahlteilereinheit (30) als auch die Strahlkombinierereinheit (80) derart ausgelegt sind, dass eine Summe von optischen Weglängen des Referenzbündels (40) durch die Strahlteilereinheit (30) und die Strahlkombinierereinheit (80) gleich einer Summe optischer Weglängen des Objektbündels (50) durch die Strahlteilereinheit (30) und die Strahlkombinierereinheit (80) ist.

5. Interferometrische Mikroskopieanordnung (1) nach einem der Ansprüche 1 bis 4, wobei sowohl das transparente Substrat (32) der Strahlteilereinheit (30) als auch das transparente Substrat (82) der Strahlkombinierereinheit (80) derart ausgelegt sind, dass eine Summe von optischen Weglängen des Referenzbündels (40) durch die transparenten Substrate (32, 82) der Strahlteilereinheit (30) und der Strahlkombinierereinheit (80) gleich einer Summe optischer Weglängen des Objektbündels (50) durch die transparenten Substrate (32, 82) der Strahlteilereinheit (30) und der Strahlkombinierereinheit (80) ist.

6. Interferometrische Mikroskopieanordnung (1) nach einem der Ansprüche 1 bis 5, wobei die Strahlteilereinheit (30) derart positioniert ist, dass das von der Objektivlinse (20) empfangene Lichtbündel (9) die punktartige Strahlteilerschicht (34) nach Durchsetzen des transparenten Substrats (32) der Strahlteilereinheit (30) erreicht.

7. Interferometrische Mikroskopieanordnung (1) nach einem der Ansprüche 1 bis 6, wobei die Strahlkombinierereinheit (80) derart positioniert ist, dass das von der Objektstrahltubuslinse (70) empfangene Objektbündel (50) die Strahlkombiniererschicht (84) nach Durchsetzen des transparenten Substrats (82) der Strahlkombinierereinheit (80) erreicht und das von der Referenzstrahltubuslinse (60) empfangene Referenzbündel (40) die Strahlkombiniererschicht (84) direkt erreicht.

8. Interferometrische Mikroskopieanordnung (1) nach einem der Ansprüche 1 bis 7, die die Beleuchtungsquelle (10) umfasst.

9. Interferometrische Mikroskopieanordnung (1) nach Anspruch 8, wobei die Beleuchtungsquelle (10) ausgelegt ist zum Liefern von kollimiertem Licht und/oder kohärentem Licht und/oder einer Kombination davon.

10. Interferometrische Mikroskopieanordnung (1) nach Anspruch 8 oder 9, wobei die Beleuchtungsquelle (10) Folgendes umfasst:
- eine erste Beleuchtungsquelle (12), die ausgelegt ist zum Erzeugen von Licht, das eine erste Wellenlänge (13) aufweist;
- eine zweite Beleuchtungsquelle (14), die ausgelegt ist zum Erzeugen von Licht, das eine zweite Wellenlänge (15) aufweist, und
- eine optische Anordnung (16), die ausgelegt ist zum Kombinieren des Lichts, das die erste Wellenlänge (13) aufweist, und des Lichts, das die zweite Wellenlänge (15) aufweist, um das Lichtbündel (9) vor Leuchten des Lichtbündels (9) auf die in der Probenebene (5) platzierte Probe auszubilden.

11. Interferometrische Mikroskopieanordnung (1) nach Anspruch 10, die ferner Folgendes umfasst:
- einen zusätzlichen optischen Detektor (92), der ausgelegt ist zum Detektieren des Lichts, das die zweite Wellenlänge (15) aufweist, wobei der optische Detektor (90) ausgelegt ist zum Detektieren von Licht, das die erste Wellenlänge (13) aufweist; und
- eine dichroitische Strahlteileroberfläche (94), die ausgelegt ist zum Empfangen des Mustererzeugungsbündels (99) von der Strahlkombinierereinheit (80) und zum Aufteilen des Mustererzeugungsbündels (99) in eine Mustererzeugungsbündel-Erste-Wellenlänge-Komponente (91) und eine Mustererzeugungsbündel-Zweite-Wellenlänge-Komponente (93) und zum Richten der Mustererzeugungsbündel-Erste-Wellenlänge-Komponente (91) auf den optischen Detektor (90), um auf dem optischen Detektor (90) das Interferenzmuster auszubilden, das sich aus dem Licht mit der ersten Wellenlänge (13) ergibt, und der Mustererzeugungsbündel-Zweite-Wellenlänge-Komponente (93) auf den zusätzlichen optischen Detektor (92), um auf dem zusätzlichen optischen Detektor (92) das Interferenzmuster auszubilden, das sich aus dem Licht mit der zweiten Wellenlänge (15) ergibt.

12. Interferometrische Mikroskopieanordnung (1) nach Anspruch 11, wobei der optische Detektor (90) und der zusätzliche optische Detektor (92) gegenüber einem Referenzpunkt an der dichroitischen Strahlteileroberfläche (94) äquidistant sind, wenn von dem optischen Detektor (90) und dem zusätzlichen optischen Detektor (92) normal gemessen wird.

13. Interferometrische Mikroskopieanordnung (1) nach einem der Ansprüche 10 bis 12, wobei die erste Beleuchtungsquelle (12) und/oder die zweite Beleuchtungsquelle (14) ausgelegt ist bzw. sind zum Liefern von kollimiertem Licht und/oder kohärentem Licht und/oder einer Kombination davon.

14. Interferometrische Mikroskopieanordnung (1) nach einem der Ansprüche 1 bis 13, wobei die Strahlteilereinheit (30) in der Brennweite (22) der Objektivlinse (20) positioniert ist.

15. Interferometrische Mikroskopieanordnung (1) nach einem der Ansprüche 1 bis 14, wobei die punktartige Strahlteilerschicht (34) am Brennpunkt (24) der Objektivlinse (20) positioniert ist.

## Revendications

1. Agencement (1) de microscopie interférométrique pour observer un échantillon placé à un plan (5) échantillon, en envoyant un faisceau (9) lumineux d'une source (10) d'éclairage sur l'échantillon et en détectant un motif d'interférence à un détecteur (90) optique, l'agencement (1) de microscopie interférométrique comprenant :
- une lentille (20) d'objectif, configurée pour recevoir le faisceau (9) lumineux après que le faisceau (9) lumineux a interagi avec l'échantillon ;
- une unité (30) de diviseur de faisceau, placée à une distance (22) focale de la lentille (20) d'objectif et configurée pour recevoir le faisceau (9) lumineux de la lentille (20) d'objectif, l'unité (30) de diviseur de faisceau comprenant un substrat (32) transparent et une couche (34) ponctuelle de division de faisceau, la couche (34) ponctuelle de division de faisceau étant configurée pour diviser une partie du faisceau (9) lumineux en un faisceau (40) de référence provenant de la réflexion sur la couche (34) ponctuelle de division de faisceau et en un faisceau (50) objet provenant d'une transmission à travers la couche (34) ponctuelle de division de faisceau, la couche (34) ponctuelle de division de faisceau étant configurée pour filtrer spatialement une partie du faisceau (9) lumineux, afin d'éliminer au moins une partie d'une information objet du faisceau (40) de référence ainsi créé ;
- une lentille (60) de tube de faisceau de référence, configurée pour recevoir le faisceau (40) de référence de l'unité (30) de diviseur de faisceau ;
- une lentille (70) de tube de faisceau objet, configurée pour recevoir le faisceau (50) objet de l'unité (30) de diviseur de faisceau ;
- un détecteur (90) optique ;
- une unité (80) de combineur de faisceau, comprenant un substrat (82) transparent et une couche (84) de combineur de faisceau, l'unité (80) de combineur de faisceau étant configurée pour recevoir le faisceau (40) de référence de la lentille (60) de tube de faisceau de référence et pour recevoir le faisceau (50) objet de la lentille (70) de tube de faisceau objet et pour combiner le faisceau (40) de référence et le faisceau (50) objet pour former un faisceau (99) créant un motif et pour diriger le faisceau (99) créant un motif vers le détecteur (90) optique pour former le motif d'interférence au détecteur (90) optique ;
- un réflecteur (62) de faisceau de référence, qui réfléchit le faisceau (40) de référence venant de la lentille (60) de tube de faisceau de référence vers l'unité (80) de combineur de faisceau ; et
- un réflecteur (72) de faisceau objet, qui réfléchit le faisceau (50) objet venant de la lentille (70) de tube de faisceau objet vers l'unité (80) de combineur de faisceau.

2. Agencement (1) de microscopie interférométrique suivant la revendication 1, dans lequel le détecteur (90) optique est configuré pour être placé à une distance focale de la lentille (60) de tube de faisceau de référence, mesurée suivant un chemin optique du faisceau (40) de référence et du faisceau (99) créant un motif, et/ou pour être placé à une distance focale de la lentille (70) de tube de faisceau objet, mesurée suivant un chemin optique du faisceau (50) objet et du faisceau (99) créant un motif.

3. Agencement (1) de microscopie interférométrique suivant les revendications 1 ou 2, dans lequel une longueur de chemin optique du faisceau (40) de référence, entre l'unité (30) de diviseur de faisceau et le détecteur (90) optique, est la même qu'une longueur de chemin optique du faisceau (50) objet entre l'unité (30) de diviseur de faisceau et le détecteur (90) optique.

4. Agencement (1) de microscopie interférométrique suivant l'une quelconque des revendications 1 à 3, dans lequel l'unité (30) de diviseur de faisceau et l'unité (80) de combineur de faisceau sont configurées toutes deux de manière à ce qu'une somme de longueurs de chemin optique du faisceau (40) de référence dans l'unité (30) de diviseur de faisceau et de l'unité (80) de combineur de faisceau soit égale à une somme de longueurs de chemin optique du faisceau (50) objet dans l'unité (30) de diviseur de faisceau et l'unité (80) de combineur de faisceau.

5. Agencement (1) de microscopie interférométrique suivant l'une quelconque des revendications 1 à 4, dans lequel le substrat (32) transparent de l'unité (30) de diviseur de faisceau et le substrat (82) transparent de l'unité (80) de combineur de faisceau sont configurés tous deux de manière à ce qu'une somme de longueurs de chemin optique du faisceau (40) de référence, dans les substrats (32, 82) transparents de l'unité (30) de diviseur de faisceau et de l'unité (80) de combineur de faisceau, soit égale à une somme de longueurs de chemin optique du faisceau (50) objet dans les substrats (32, 82) transparents de l'unité (30) de diviseur de faisceau et de l'unité (80) de combineur de faisceau.

6. Agencement (1) de microscopie interférométrique suivant l'une quelconque des revendications 1 à 5, dans lequel l'unité (30) de diviseur de faisceau est placée de manière à ce que le faisceau (9) lumineux, reçu de la lentille (20) d'objectif, atteigne la couche (34) ponctuelle de division de faisceau après avoir traversé le substrat (32) transparent de l'unité (30) de diviseur de faisceau.

7. Agencement (1) de microscopie interférométrique suivant l'une quelconque des revendications 1 à 6, dans lequel l'unité (80) de combineur de faisceau est placée de manière à ce que le faisceau (50) objet, reçu de la lentille (70) de tube de faisceau objet, atteigne la couche (84) de combineur de faisceau après avoir traversé le substrat (82) transparent de l'unité (80) de combineur de faisceau et de manière à ce que le faisceau (40) de référence, reçu de la lentille (60) de tube de faisceau de référence, atteigne directement la couche (84) de combineur de faisceau.

8. Agencement (1) de microscopie interférométrique suivant l'une quelconque des revendications 1 à 7, comprenant la source (10) d'éclairage.

9. Agencement (1) de microscopie interférométrique suivant la revendication 8, dans lequel la source (10) d'éclairage est configurée pour donner au moins une lumière collimatée, une lumière cohérente et leurs combinaisons.

10. Agencement (1) de microscopie interférométrique suivant la revendication 8 ou 9, dans lequel la source (10) d'éclairage comprend :
- une première source (12) d'éclairage, configurée pour produire de la lumière d'une première longueur d'onde (13) ;
- une deuxième source (14) d'éclairage, configurée pour produire de la lumière d'une deuxième longueur d'onde (15), et
- un montage (16) optique, configuré pour combiner la lumière de la première longueur d'onde (13) et la lumière de la deuxième longueur d'onde (15) pour former le faisceau (9) lumineux avant d'envoyer le faisceau (9) lumineux sur l'échantillon placé au plan (5) échantillon.

11. Agencement (1) de microscopie interférométrique suivant la revendication 10, comprenant, en outre :
- un détecteur (92) optique supplémentaire, configuré pour détecter la lumière de la deuxième longueur d'onde (15), le détecteur (90) optique étant configuré pour détecter de la lumière de la première longueur d'onde (13) ; et
- une surface (94) dichroïque de diviseur de faisceau, configurée pour recevoir le faisceau (99) créant le motif à partir de l'unité (80) de combineur de faisceau et pour diviser le faisceau (99) créant le motif en un premier composant (91) de faisceau créant un motif de première longueur d'onde et en un deuxième composant (93) de faisceau créant un motif de deuxième longueur d'onde et pour diriger le premier composant (91) de faisceau créant un motif de première longueur d'onde vers le détecteur (92) optique, pour former au détecteur (92) optique le motif d'interférence provenant de la lumière ayant la première longueur d'onde (13), et le deuxième composant (93) de faisceau créant un motif de deuxième longueur d'onde vers le détecteur (92) optique supplémentaire, pour former au détecteur (92) optique supplémentaire le motif d'interférence provenant de la lumière ayant la deuxième longueur d'onde (15).

12. Agencement (1) de microscopie interférométrique suivant la revendication 11, dans lequel le détecteur (90) optique et le détecteur (92) optique supplémentaire sont équidistants d'un point de référence à la surface (94) dichroïque de diviseur de faisceau, tel que mesuré normalement au détecteur (90) optique et au détecteur (92) optique supplémentaire.

13. Agencement (1) de microscopie interférométrique suivant l'une quelconque des revendications 10 à 12, dans lequel au moins l'une de la première source (12) d'éclairage et de la deuxième source (14) d'éclairage est configurée pour donner au moins l'une d'une lumière collimatée, d'une lumière cohérente et de leurs combinaisons.

14. Agencement (1) de microscopie interférométrique suivant l'une quelconque des revendications 1 à 13, dans lequel l'unité (30) de diviseur de faisceau est placée à la distance (22) focale de la lentille (20) d'objectif.

15. Agencement (1) de microscopie interférométrique suivant l'une quelconque des revendications 1 à 14, dans lequel la couche (34) ponctuelle de division de faisceau est placée à un foyer (24) de la lentille (20) d'objectif.
